# EUROPEAN PATENT APPLICATION

(11) **EP 1 950 691 A2**
(43) Date of publication of application: **30.07.2008**
(21) Application number: 08001236.2
(22) Date of filing: 23.01.2008
(51) Int. Cl.: G06K 9/20, G06K 9/00

(54) **Skin area detection imaging device**

(30) Priority: 23.01.2007 JP 2007012921
(71) Applicant: Funai Electric Co., Ltd., Daito-shi, Osaka 574-0013 (JP)
(72) Inventor: Nakao, Yoshizumi, Daito-shi Osaka 574-0013 (JP); Kugo, Kouichi, Daito-shi Osaka 574-0013 (JP); Toyoda, Takashi, Daito-shi Osaka 574-0013 (JP); Masaki, Yasuo, Daito-shi Osaka 574-0013 (JP)
(74) Representative: Grünecker, Kinkeldey, Stockmair & Schwanhäusser Anwaltssozietät

(57) **Abstract**

A skin area detection imaging device for detecting a skin area of a human body as an object comprises: two optical lenses to form two unit images on an imaging element by collecting light from the object illuminated by near-infrared light; a rolling shutter for sequentially reading the unit images; and two LEDs for emitting lights with different wavelengths (850 nm and 940 nm) in the near-infrared range. A microprocessor switches on the two LEDs when reading the two unit images, respectively. The skin area of one read unit image is displayed with brightness different from that of the other unit image based on difference in reflectance to various wavelengths of near-infrared light. The microprocessor compares the two unit images to determine, as a skin area, an area having difference in brightness larger than a predetermined value. This makes it possible to detect the skin area in a short time.

## Description

### BACKGROUND OF THE INVENTION

### 1. Field of the Invention

The present invention relates to a skin area detection imaging device, and more particularly to a skin area detection imaging device for detecting, from an image of an object to be imaged, a skin area of a human body contained in the object illuminated by a light in the near-infrared range.

### 2. Description of the Related Art

When illuminated by a light in the near-infrared range, a skin (flesh) area of a human body (being) has different reflectances to different wavelengths of the light (e.g. about 45% to a light of 850 nm, and about 40% to a light of 950 nm). Conventionally, these properties are used e.g. in a monitor camera to detect a human body. For example, Japanese Laid-open Patent Publication 2006-47067 discloses a human body detection device which mounts two light emitting diodes to emit near-infrared lights of two different wavelengths. In this human body detection device, the two light emitting diodes sequentially generate emissions to image two images of an object to be imaged so as to extract the magnitude relation of pixel values from the two images. A skin area of a human body is detected based on whether or not the thus extracted magnitude relation of the pixel values matches or corresponds to reference reflectance properties of a skin area.

The human body detection device of Japanese Laid-open Patent Publication 2006-47067 has one set of an optical lens system and an imaging element for imaging an image of the object to be imaged. Thus, in order to obtain two images for comparison, it requires a two-step process in which one light emitting diode to emit a light of one wavelength is turned on and off to obtain an image of an object illuminated by the light of the one wavelength, and thereafter the other light emitting diode to emit a light of the other wavelength is turned on and off to obtain an image of the object illuminated by the light of the other wavelength. This makes it difficult to detect a skin area of a human body in a short time.

As disclosed in Japanese Laid-open Patent Publication Hei 5-196989, a camera is also known in which an infrared light is irradiated onto an object (including a human body) to be imaged, and the reflectance of a main candidate area of the object as obtained by the infrared irradiation is compared with the reflectance of a flesh (skin) area of the object as obtained by experiments in advance, thereby detecting a flesh area of the object. However, in the camera of this Patent Publication for detection of a flesh area of the object, the object is divided into a predetermined number of light measurement areas to which infrared light from a light source is sequentially irradiated.

The reflectances of the infrared light reflected from the light measurement areas of the object are sequentially measured. Based on the sequentially measured reflectances of the reflected infrared light, the respective light measurement areas of the object are determined as to whether or not they are flesh areas. Thus, in this conventional camera, it is difficult to obtain a high resolution (or outline shape) of the measured flesh area of the object which is determined by the predetermined number of light measurement areas. In addition, in principle, it takes a long time for the conventional camera to detect a skin area of the object, because the light measurement areas of the object are required to be sequentially measured for the determination.

### SUMMARY OF THE INVENTION

An object of the present invention is to provide a skin area detection imaging device for detecting, from an image of an object to be imaged, a skin area of a human body contained in the object illuminated by a light in the near-infrared range, in which the detection can be performed in a short time.

According to the present invention, this object is achieved by a skin area detecting imaging device comprising: multiple optical lenses for collecting light from an object to be imaged, which includes a human body with a skin area; a solid-state imaging element for imaging images formed by the optical lenses; shutter means for sequentially reading multiple images formed on the solid-state imaging element by the optical lenses, respectively; different image forming means for using light containing light (hereafter referred to as "different-wavelength light") with two different wavelengths in near-infrared range to form, on the solid-state imaging element, two images different from each other in brightness of the skin area; storage means for storing, as two image information, the two images which are formed on the solid-state imaging element by the different image forming means, and are read and obtained by one time imaging operation of the shutter means; and skin area detection means for comparing the two image information stored in the storage means to detect, as the skin area, an area having difference in brightness larger than a predetermined value.

This skin area detection imaging device detects a skin area of a human body based on two image information obtained by one time imaging operation of the shutter means. Thus, the skin area detection imaging device of the present invention makes it possible to detect the skin area in a short time as compared with the detection device disclosed in Japanese Laid-open Patent Publication 2006-47067, which requires a two-step process to obtain an image of an object illuminated by light of one wavelength, and thereafter obtain an image of the object illuminated by light of the other wavelength.

It is possible that the different image forming means in the skin detection imaging device comprises: a flash light source for timewise switching and emitting the different-wavelength light to illuminate the object; and switching control means for controlling the switching timing of the different-wavelength light of the flash light source in synchronization with timing of switching of the images read by the shutter means.

It is also possible that the different image forming means in the skin detection imaging device comprises: a flash light source for illuminating the object with wide wavelength light containing the near-infrared range; and two band pass filters placed in light collection paths of the multiple optical lenses for selectively transmitting light with two different wavelengths in the near-infrared range, respectively, for the respective light collection paths.

Preferably, the two bandpass filters selectively transmit light with different wavelengths in the near-infrared range, respectively, and also transmit light in the visible range. This makes it possible to obtain a normal image e.g. with normal color of the object to be imaged.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is a schematic block diagram of a skin area detection imaging device according to a first embodiment of the present invention, also showing a cross-sectional view of an optical lens system contained therein;
FIG. 2 is a schematic front view of the optical lens system in the skin area detection imaging device;
FIG. 3 is a schematic front view of a solid-state imaging element with control circuits in block form in the skin area detection imaging device;
FIG. 4 is a schematic view for explaining an order of reading unit images as well as a switching timing of the emission of two LEDs;
FIG. 5 is a flow chart of a skin area detection process performed by the skin area detection imaging device;
FIG. 6A is a schematic view of an example of a unit image of an object to be imaged, which is illuminated by near-infrared light with a wavelength of 850 nm as a center wavelength in the skin area detection imaging device;
FIG. 6B is a schematic view of an example of a unit image of an object to be imaged, which is illuminated by near-infrared light with a wavelength of 940 nm as a center wavelength, in the skin area detection imaging device;
FIG. 6C is a schematic view of an example of an image with a detected skin area;
FIG. 7 is a graph showing reflectance of a skin area to light with various wavelengths in the near-infrared light range;
FIG. 8 is a schematic block diagram of the skin area detection imaging device with bandpass filters according to a second embodiment of the present invention;
FIG. 9 is a graph showing the transmission properties of a bandpass filter;
FIG. 10 is a graph showing the transmission properties of another bandpass filter in the skin area detection imaging device;
FIG. 11 is a graph showing the transmission properties of a modified bandpass filter which transmits both near-infrared light with a wavelength of about 850 nm as a center wavelength and visible light in the range from 360 to 660 nm; and
FIG. 12 is a graph showing the transmission properties of another modified bandpass filter which transmits both near-infrared light with a wavelength of about 940 nm as a center wavelength and visible light in the range from 360 to 660 nm.

### DESCRIPTION OF THE PREFERRED EMBODIMENTS

Embodiments of the invention, as best mode for carrying out the invention, will be described hereinafter with reference to the drawings. It is to be understood that the embodiments herein are not intended as limiting, or encompassing the entire scope of, the invention. Note that like parts are designated by like reference numerals or characters throughout the drawings.

### (FIRST EMBODIMENT)

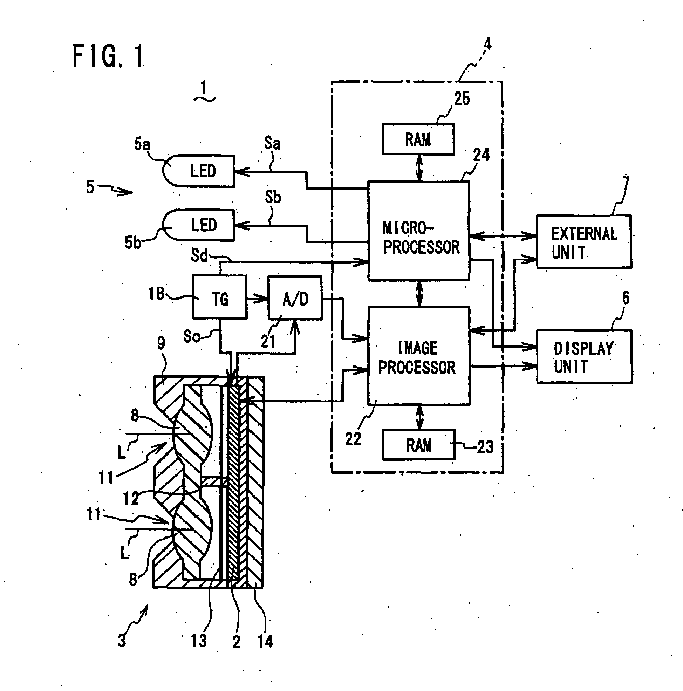

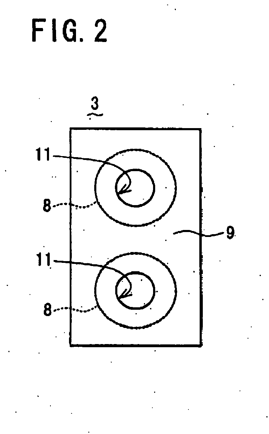

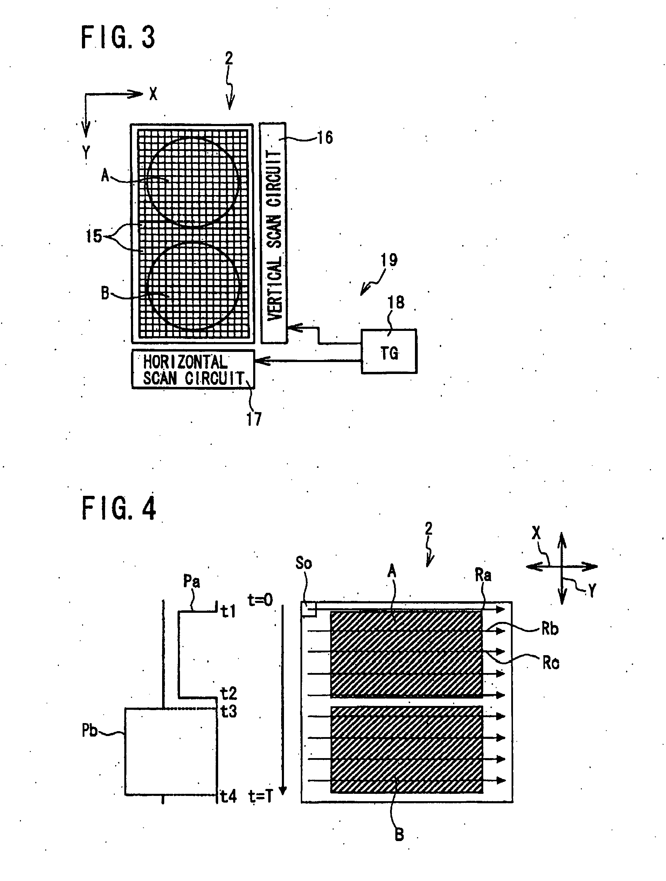

Referring to FIG 1 to FIG 7, a skin area detection imaging device 1 according to a first embodiment of the present invention will be described. FIG 1 is a schematic block diagram of the skin area detection imaging device 1, also showing a cross-sectional view of an optical lens system 3 contained therein, while FIG 2 is a schematic front view of the optical lens system 3. FIG 3 is a schematic front view of a solid-state imaging element 2 with control circuits in block form in the skin area detection imaging device 1. As shown in FIG. 1 to FIG 3, the skin area detection imaging device 1 comprises an optical lens system 3 for collecting, at a focal point, light from an object to be imaged so as to form two upper and lower images (hereafter referred to as "unit images") A and B on a solid-state imaging element (photodetector array) 2 placed at the focal point.

The skin area detection imaging device 1 further comprises: an electronic circuit 4 for electronically processing the two unit images A and B formed on the solid-state imaging element 2 so as to detect a skin area; a flash light source 5 having two LEDs (light emitting diodes) 5a and 5b with two different wavelengths in the near-infrared region as center wavelengths, respectively, for sequentially (alternatively) emitting near-infiared light with the two different wavelengths based on timing signals Sa and Sb from the electronic circuit 4; a display unit 6 formed e.g. of a liquid crystal panel for displaying an image of a skin area detected by the electronic circuit 4 and the like; and an external unit 7 formed e.g. of a personal computer e.g. for inputting control data and capturing image data. The two LEDs 5a and 5b in the present embodiment emit light of two different wavelengths, in which the LED 5a emits near-infrared light with a wavelength of 850 nm as a center wavelength, while the other LED 5b emits near-infrared light with a wavelength of 940 nm as a center wavelength.

As shown in FIGs. 1 and 2, the optical lens system 3 comprises two optical lenses 8 placed vertically relative to each other to have optical axes L parallel to each other, and stop apertures 11 formed in a support frame 9 for supporting the optical lenses 8. The optical system 3 further comprises a partition wall 12 for preventing lights emitted from the respective optical lenses 8 toward the solid-state imaging element 2 from interfering each other, and an optical filter 13 placed in front of the solid-state imaging element 2. The optical filter 13 is a filter to pass light in the near-infrared range. The solid-state imaging element 2 is formed on a semiconductor substrate 14 as a CMOS (Complementary Metal Oxide Semiconductor) image sensor, and has a number of pixels 15 in row and column directions (Directions X and Y shown in FIG 3 and FIG 4 described later).

The respective optical lenses 8 collect light onto the solid-state image element 2 to form unit images A and B as shown by circles in FIG 3, respectively. The respective unit images A and B are converted by the solid-state imaging element 2 into analog image information (voltage of the charge stored in the pixels), and are sequentially read in order of unit image A and unit image B by a rolling shutter described later. A timing generator 18 for outputting a timing signal Sc to a vertical scanning circuit 16 and a horizontal scanning circuit 17 of the solid-state imaging element 2 is provided on the substrate 14 on which the solid-state imaging element 2 is formed. Based on the timing signal Sc, the pixels 15 of the solid-state imaging element 2 are read in a predetermined sequence described in detail later, whereby the unit image A and the unit image B are read in this order. The combination of the timing generator 18 with the vertical scanning circuit 16 and the horizontal scanning circuit 17 forms a rolling shutter 19 (claimed "shutter means").

Referring back to FIG 1, the electronic circuit 4 will be described. The electronic circuit 4 comprises an image processor 22 for capturing, as a digital signal, analog image information output from the solid-state imaging element 2 via an A/D (analog-to-digital) converter 21 as well as a RAM (random access memory) 23 (claimed "storage means") for temporarily storing the image information captured by the image processor 22. The electronic circuit 4 further comprises a microprocessor 24 (claimed "switching control means" and "skin area detection means") for processing, according to a process described later, the image information captured by the image processor 22 so as to detect a skin area as well as a RAM (random access memory) 25 for temporarily storing the image information of the detected skin area. The image processor 22 outputs control signals to the solid-state imaging element 2 to perform various controls such as exposure control and gain control, and also subjects the captured image information to image processing such as gamma correction and white balance correction. The microprocessor 24 is connected to the timing generator 18, and designed to output timing signals Sa and Sb to the flash light source 5 at a predetermined timing based on a horizontal synchronizing signal Sd output from the timing generator 18.

Referring now to FIG 4, the following describes a process using the rolling shutter 19 to read the unit images A and B on the solid-state imaging element 2 as well as a switching timing of the emission of the two LEDs 5a and 5b as the flash light source 5. FIG 4 is a schematic view for explaining an order of reading the unit images A and B as well as a switching timing of the emission of the two LEDs 5a and 5b. As is apparent from the following description, the combination of the microprocessor 24 (claimed "switching control means") with the LEDs 5a and 5b (flash light source 5) forms the claimed "different image forming means" according to the first embodiment. First, the process of reading the unit images A and B on the solid-state imaging element 2 will be described. The pixels 15 in the first row in a matrix of rows and columns are first read in the row direction (direction X) starting from origin So. Thereafter, the pixels 15 in the subsequent rows (second row, third row and so on in the column direction or direction Y after the first row containing the origin So) are sequentially read. As a result, all the pixels 15 are read, whereby the unit images A and B are read in this order. In FIG 4, arrows Ra, Rb and Rc schematically show the sequence of reading the pixels 15.

Each time the reading of the pixels 15 in each row is completed, the timing generator 18 for controlling the above-described reading sequence (i.e. timing) outputs a horizontal synchronizing signal Sd to the microprocessor 24. The microprocessor 24 counts the horizontal synchronizing signals Sd to recognize the timing of the start and end of reading the unit image A and of reading the unit image B. The microprocessor 24 outputs an on-command signal and an off-command signal to the LED 5a in synchronization with the start and end of reading the unit image A, respectively, while the microprocessor 24 outputs an on-command signal and an off-command signal to the LED 5b in synchronization with the start and end of reading the unit image B, respectively.

FIG 4 shows pulse waveforms Pa and Pb which go up to down (downwards in direction Y), respectively, and which represent on/off timings of the LED 5a and on/off timings of the LED 5b, respectively. Assume that t=0 at the time of starting the reading of the first pixel 15 at the origin So, and that t=T at the time of ending the reading of the last pixel 15. Under this assumption, the pulse waveforms Pa and Pb show that the LED 5a is switched on at the time (t1) of starting the reading of the unit image A, and the LED 5a is switched off at the time (t2) of ending the reading of the unit image A, and that the LED 5b is switched on at the time (t3) of starting the reading of the unit image B, and the LED 5b is switched off at the time (t4) of ending the reading of the unit image B. Thus, the two LEDs 5a and 5b (flash light source 5) timewise switch and emit two different wavelengths of light in the near-infrared range for illuminating the object to be imaged.

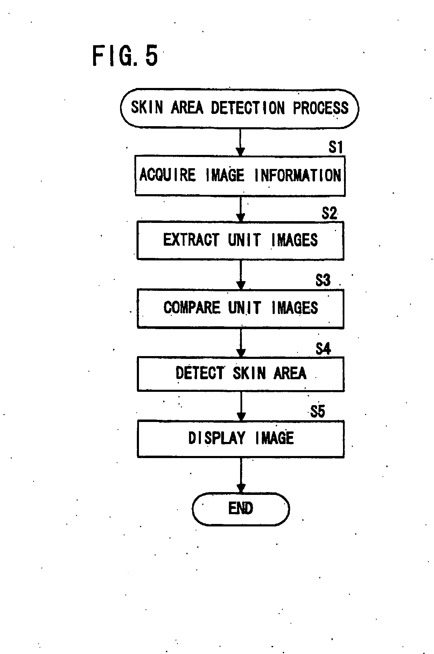

Referring now to the flow chart of FIG. 5, a skin area detection process performed by the skin area detection imaging device 1 of the present embodiment will be described. When the imaging starts, the rolling shutter 19 is operated to sequentially read unit images A and B formed on the solid-state imaging element 2. The image processor 22 acquires image information of the unit images A and B (S1), and extracts or cuts out the respective image information of the unit images A and B in a predetermined rectangular shape (S2). Here, the unit image A is an image of an object to be imaged, which is illuminated by near-infrared light with a wavelength of 850 nm as a center wavelength, which is emitted from the LED 5a. On the other hand, the unit image B is an image of an object to be imaged, which is illuminated by near-infrared light with a wavelength of 940 nm as a center wavelength, which is emitted from the LED 5b.

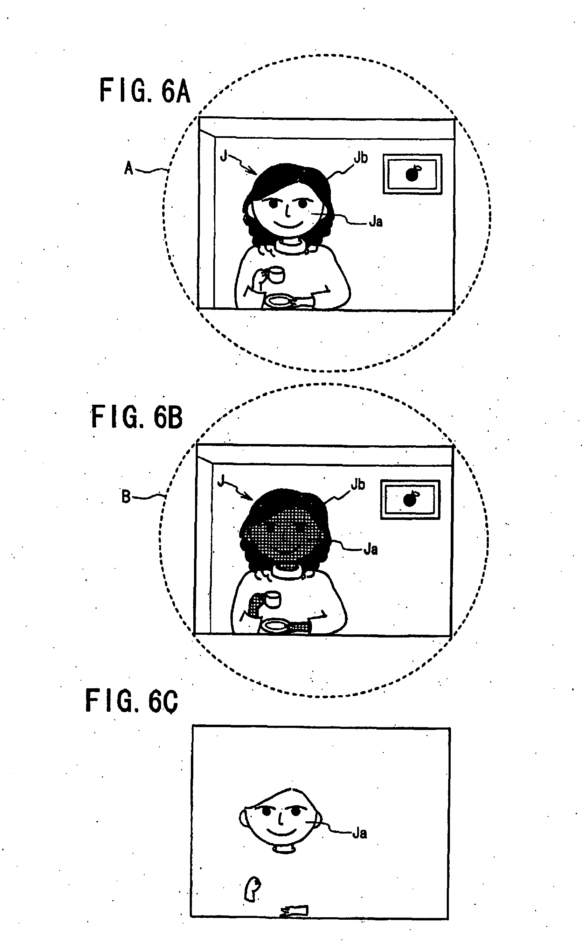

The combination of FIG 6A and FIG 6B shows a specific example of the unit image A and the unit image B. More specifically, FIG 6A is a schematic view of an example of the unit image A of an object to be imaged, which is illuminated by near-infrared light with a wavelength of 850 nm as a center wavelength, while FIG 6B is a schematic view of an example of the unit image B of an object to be imaged, which is illuminated by near-infrared light with a wavelength of 940 nm as a center wavelength, in the skin area detection imaging device 1. As shown in FIG 6A and FIG 6B, a skin area Ja e.g. of a face of a human body (being) J, which is an object to be imaged, is displayed brighter (lighter) in the unit image A (FIG 6A) illuminated by the LED 5a than in the unit image B (FIG 6B) illuminated by the LED 5b.

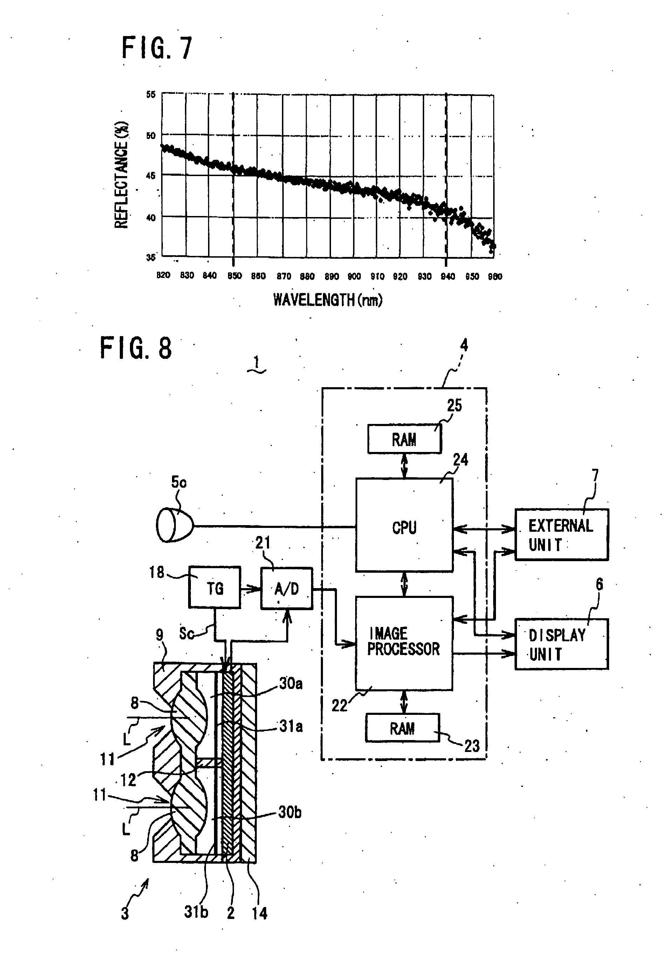

In contrast, a non-skin area Jb such as hair and clothes of the human body J does not make much difference between the unit image A (FIG 6A) illuminated by the LED 5a and the unit image B (FIG 6B) illuminated by the LED 5b, because they have substantially the same reflectance to near-infrared light with different wavelengths. FIG 7 is a graph showing reflectance of a skin area to light with various wavelengths in the near-infrared light range. As shown in FIG 7, the reflectance to the near-infrared light with a wavelength of 850 nm is about 45%, while the reflectance to the near-infrared light with a wavelength of 940 nm is about 40%. Note that the range with a wavelength smaller than 850 nm is a red range of visible light, and that the sensitivity of the solid-state imaging element 2 decreases abruptly in the range with a wavelength larger than 940 nm.

Referring back to the flow chart of FIG 5, the microprocessor 24 next compares the brightness of the unit image A with that of the unit image B for each pixel 15 in the entire area (S3) so as to determine whether or not the difference in brightness of each pixel 15 between the unit images A and B is larger than a predetermined value. The microprocessor 24 determines that an area in which the difference in brightness of each pixel 15 between the unit images A and B is larger than the predetermined value is a skin area, thereby detecting a skin area (S4). In the specific example given here, the portions of the face and hands of the human body J, which are not covered by the clothes, are determined by the microprocessor 24 as a skin area Ja. The microprocessor 24 then displays, on the display unit 6, an image of the thus determined and detected skin area Ja (S5). FIG 6C is a schematic view of an example of an image with the detected skin area Ja. As described in the foregoing, according to the skin area detection imaging device 1 of the present embodiment, two different images (unit images A and B) whose difference in brightness of skin area Ja is larger than a predetermined value can be obtained by one time imaging operation of the rolling shutter 19. Accordingly, the skin area of an object to be imaged can be detected in a short time.

### (SECOND EMBODIMENT)

Referring to FIG 8 to FIG 10, a skin area detection imaging device 1 according to a second embodiment of the present invention will be described. FIG 8 is a schematic block diagram of the skin area detection imaging device 1 with bandpass filters 31a and 31b. The skin area detection imaging device 1 of the second embodiment is substantially the same as that of the first embodiment, except that the two LEDs 5a and 5b forming the flash light source 5 in the first embodiment are replaced here by one halogen lamp 5c (which thus also serves as a flash light source 5) to emit wide wavelength light containing the near-infrared range, and that the optical filter 13 in the first embodiment is replaced here by two bandpass filters 31a and 31b to selectively transmit light with two different wavelengths in the near-infrared range, respectively, for two light collection paths 30a and 30b formed by the two optical lenses 8, respectively. These differences between the first and second embodiments will be described in detail below.

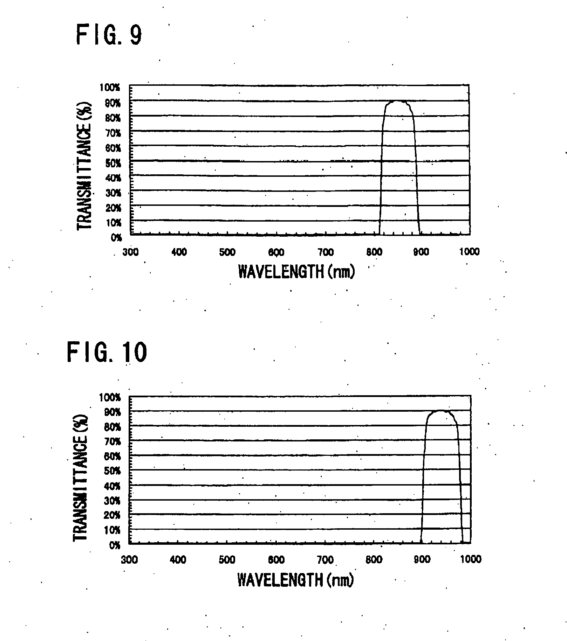

The halogen lamp 5c is a light source to emit a wide wavelength light containing the near-infrared range and visible light range. In contrast to the LEDs 5a and 5b, which can be switched between on and off at a predetermined timing, the halogen lamp 5c is designed to emit light continuously while imaging an object to be imaged. Note that the halogen lamp 5c can be replaced by one LED which emits wide wavelength light. As is apparent from the following description, the combination of the bandpass filters 31a and 31b with the halogen lamp 5c (flash light source 5) forms the claimed "different image forming means" according to the second embodiment. The bandpass filters 31a and 31b are respectively placed in the light collection paths 30a and 30b which are specific to the two optical lenses 8, respectively. The bandpass filter 31 a is a filter to transmit near-infrared light with a wavelength of about 850 nm as a center wavelength, while the bandpass filter 31b is a filter to transmit near-infrared light with a wavelength of about 940 nm as a center wavelength. FIG 9 is a graph showing the transmission properties of the bandpass filter 31a, while FIG 10 is a graph showing the transmission properties of the bandpass filter 31 b in the skin area detection imaging device 1 of the second embodiment.

Similarly as in the skin area detection imaging device 1 of the first embodiment, a skin area Ja is displayed brighter (lighter) in the unit image A (FIG 6A) as formed by near-infrared light which is selectively transmitted by the bandpass filter 31a, while a skin area Ja is displayed darker in the unit image B (FIG 6B) as formed by near-infrared light which is selectively transmitted by the bandpass filter 31b. Similarly as in the skin area detection process performed by the skin area detection imaging device 1 of the first embodiment, the skin area detection imaging device 1 of the second embodiment performs a skin area detection process in order of acquisition of image information (S1), extraction of unit images in a predetermined shape (S2), comparison of unit images (S3), detection of skin area (S4) and image display (S5). Similarly as in the first embodiment, according to the skin area detection imaging device 1 of the second embodiment, two different images (unit images A and B) whose difference in brightness of skin area Ja is larger than a predetermined value can be obtained by one time imaging operation of the rolling shutter 19. Accordingly, the skin area Ja of an object to be imaged can be detected in a short time.

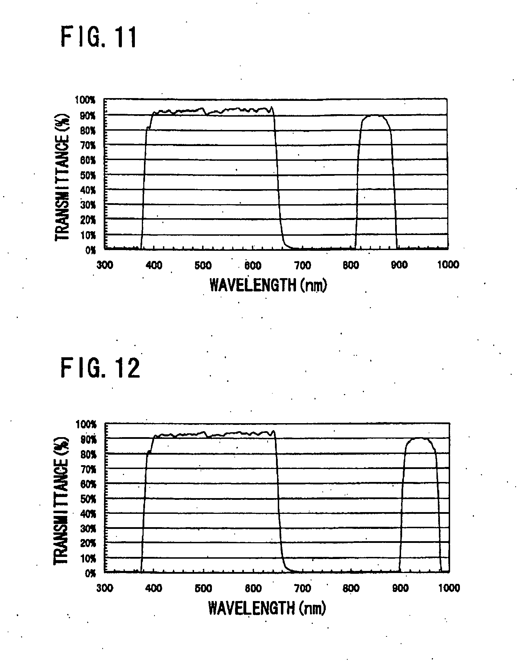

It is to be noted that the present invention is not limited to the above-described embodiments, and various modifications are possible. For example, in the second embodiment, the bandpass filters 31 a and 31b can be replaced by those which include visible light range as a light transmission range. Referring to FIG 11 and FIG 12, such modified examples will be described. More specifically, the bandpass filter 31a can be replaced by one which transmits both near-infrared light with a wavelength of about 850 nm as a center wavelength and visible light in the range from 360 to 660 nm as shown in FIG 11. On the other hand, the bandpass filter 31 b can be replaced by one which transmits both near-infrared light with a wavelength of about 940 nm as a center wavelength and visible light in the range from 360 to 660 nm as shown in FIG 12. An advantage in this case is that each of the unit images A and B themselves of an object to be imaged can be easily obtained as a normal image e.g. with normal color. Further, a user can view the obtained image displayed on the display unit 6, and the skin area detection imaging device 1 can be used as a monitor camera device.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

This application is based on Japanese patent application 2007-012921 filed January 23, 2007, the content of which is hereby incorporated by reference.

## Claims

1. A skin area detecting imaging device comprising:
multiple optical lenses for collecting light from an object to be imaged, which includes a human body with a skin area;
a solid-state imaging element for imaging images formed by the optical lenses;
shutter means for sequentially reading multiple images formed on the solid-state imaging element by the optical lenses, respectively;
different image forming means for using light containing light (hereafter referred to as "different-wavelength light") with two different wavelengths in near-infrared range to form, on the solid-state imaging element, two images different from each other in brightness of the skin area;
storage means for storing, as two image information, the two images which are formed on the solid-state imaging element by the different image forming means, and are read and obtained by one time imaging operation of the shutter means; and
skin area detection means for comparing the two image information stored in the storage means to detect, as the skin area, an area having difference in brightness larger than a predetermined value.

2. The skin area detection imaging device according to claim 1, wherein the different image forming means comprises:
a flash light source for timewise switching and emitting the different-wavelength light to illuminate the object; and
switching control means for controlling the switching timing of the different-wavelength light of the flash light source in synchronization with timing of switching of the images read by the shutter means.

3. The skin area detection imaging device according to claim 1, wherein the different image forming means comprises:
a flash light source for illuminating the object with wide wavelength light containing the near-infrared range; and
two band pass filters placed in light collection paths of the multiple optical lenses for selectively transmitting light with two different wavelengths in the near-infrared range, respectively, for the respective light collection paths.

4. The skin area detection imaging device according to claim 3, wherein the two bandpass filters selectively transmit light with different wavelengths in the near-infrared range, respectively, and also transmit light in the visible range.
